(19) Europäisches Patentamt

European Patent Office

Office européen des brevets

(11) **EP 1 156 268 B1**

(12) **EUROPÄISCHE PATENTSCHRIFT**

(45) Veröffentlichungstag und Bekanntmachung des Hinweises auf die Patenterteilung:
**08.02.2006 Patentblatt 2006/06**

(21) Anmeldenummer: **00126314.4**

(22) Anmeldetag: **01.12.2000**

(51) Int Cl.:
**_F21V 8/00_** $^{(2006.01)}$

(54) **Lichtleiterleuchte mit einer uneinheitlichen lichtbrechenden Struktur**

Light guide lamp with nonuniform refractive structure

Lampe à guide de lumière avec structure réfractive non uniforme

(84) Benannte Vertragsstaaten:
**AT BE CH CY DE DK ES FI FR GB GR IE IT LI LU MC NL PT SE TR**
Benannte Erstreckungsstaaten:
**SI**

(30) Priorität: **01.12.1999 DE 19957812**
**29.12.1999 DE 19963685**
**09.03.2000 DE 10011304**

(43) Veröffentlichungstag der Anmeldung:
**21.11.2001 Patentblatt 2001/47**

(73) Patentinhaber: **Siteco Beleuchtungstechnik GmbH**
**83301 Traunreut (DE)**

(72) Erfinder:
• **Leibig, Joachim**
**83374 Traunwalchen (DE)**
• **Belloni, Paola**
**83278 Traunstein (DE)**
• **Wolkersdorfer, Josef**
**83278 Traunstein (DE)**

(74) Vertreter: **Schohe, Stefan**
**Forrester & Boehmert**
**Pettenkoferstrasse 20-22**
**80336 München (DE)**

(56) Entgegenhaltungen:
**EP-A- 0 544 332          US-A- 5 005 108**
**US-A- 5 999 685**

EP 1 156 268 B1

**Beschreibung**

Die Erfindung betrifft eine Leuchte gemäß dem Oberbegriff des Anspruchs 1. Eine Leuchte dieser Art ist aus US-PS 5 005 108 bekannt. Andere Leuchten dieser Art sind beispielsweise aus WO 00/16006 oder EP 0 846 915 A1 bekannt. Bei diesen bekannten Leuchten können die Lichtauskoppelemente, beispielsweise Prismen, zwar für verschiedene Leuchten unterschiedliche Formen annehmen. Auf einer Lichtauskoppelfläche sind die Prismen jedoch immer identisch ausgebildet, so daß ein uniformes Lichtbrechungsverhalten über der gesamten Lichtauskoppelfläche erzeugt wird.

Während sich derartige Leuchten insbesondere insofern bewährt haben, als mit ihnen die für viele Innenraumbeleuchtungen erforderliche Abschirmung erzielt werden kann, hat sich im Einzelfall herausgestellt, daß die Leuchtedichtekurven dieser Leuchten eine rasche Abfolge von Maxima und Minima, z. B. in Form eines Zickzackmusters, aufweisen können, so daß die Leuchte bei unterschiedlichen Blickwinkeln heller und dunkler wirkt. Bei bestimmten Blickwinkeln nimmt ein Betrachter in solchen Fällen bei einer geringfügigen Kopfbewegung eine Helligkeitsänderung wahr, da sich sein Blickwinkel von dem Bereich eines Maximums zu dem eines Minimums verlagert hat, so daß die Leuchte zu blinken scheint. Dies ist in vielen Fällen unerwünscht, da ein solcher Effekt ablenkt und einen Arbeitsprozeß stören kann. Von vielen Betrachtern wird eine tatsächliche oder scheinbare Schwankung der Leuchtdichte einer Leuchte auch als unangenehm empfunden. Weiterhin besteht bei solchen Leuchtenkonstruktionen häufig die Notwendigkeit, Maxima der Leuchtdichte, die für die Leuchtdichtebewertung relevant sind, abzubauen.

US-PS 5 005 108 offenbart eine flache Lichtquelle, die zu Beleuchtungszwecken, aber auch aus Zwecken der Phototherapie, der Bestrahlung von Werkstoffen und anderen Zwecken eingesetzt werden kann, bei welcher in einen flachen Lichtleiter von einer Schmalseite aus von einer Lichtquelle Licht eingekoppelt wird und an einer der beiden Grundflächen ausgekoppelt wird. Die Lichaustrittsfläche kann dabei lichtbrechende Strukturen aufweisen, deren Größe, Form und Tiefe sich entlang der Länge des Lichtleiters ändern kann.

EP 0 544 332 A1 offenbart eine Hintergrundbeleuchtung für LCD-Bildschirme, bei welcher in einen flächigen Lichtleiter seitlich Licht von einer Lichtquelle eingekoppelt wird. Die Lichtaustrittsseite des Lichtleiters ist unstrukturiert, während die der Lichtaustrittsseite gegenüberliegende Fläche reflektierend ausgebildet ist. Die letztgenannte reflektierende Fläche kann Prismen aufweisen, wobei Parameter der Prismen, wie ihre Breite oder der Neigungswinkel sich kontinuierlich als Funktion des Abstands von der Lichtquelle verändern können.

Es ist die Aufgabe der Erfindung, eine Leuchte gemäß dem Oberbegriff des Anspruchs 1 zur Verfügung zu stellen, mit welcher eine gleichmäßigere Leuchtdichteverteilung erreicht werden kann.

Diese Aufgabe wird erfindungsgemäß gelöst durch eine Leuchte mit einem Lichtleiter, insbesondere einem Hohllichtleiter, in den von einer oder mehreren Lampen an zumindest einer Lichteinkoppelseite Licht eingekoppelt wird und zumindest an einer Lichtaustrittsseite Licht ausgekoppelt wird, wobei die Lichtauskoppelseite zumindest auf einem Teilbereich einer Lichtauskoppelfläche eine refraktive Lichtauskoppeleinrichtung mit mehreren Lichtauskoppelelementen aufweist, welche aufgrund von Lichtbrechung eine Lichtlenkung des austretenden Lichtes bewirken, welche dadurch gekennzeichnet ist, daß die lichtlenkenden Eigenschaften von Lichtauskoppelementen auf einer Lichtauskoppelseite zumindest auf einem Teilbereich der Lichtauskoppelfläche verschieden sind.

Gemäß einer bevorzugten Ausführungsform kann die Erfindung vorsehen, daß der Abstand zwischen Lichtauskoppelementen mit unterschiedlichen lichtlenkenden Eigenschaften derart bemessen ist, daß dieser Teilbereich der Lichtauskoppelfläche von einem Betrachter zumindest in bestimmten Richtungen einheitlich leuchtend wahrgenommen wird. Der Betrachter nimmt Helligkeitsunterschiede zwischen den einzelnen Lichtauskoppelelementen nicht wahr bzw. löst diese nicht auf. In der Regel wird der Teilbereich nicht vollständig gleichmäßig leuchten, da die Struktur der Lichtauskoppelelemente u. U. selbst geringfügige Helligkeitsunterschiede erzeugt, z. B. dunkle Linien an der Grenze zwischen Lichtauskoppelelementen, die jedoch unabhängig davon auftreten, ob der in Rede stehende Bereich mit identischen Lichtauskoppelelementen bestückt ist oder nicht. Der Betrachter nimmt den besagten Teilbereich so wahr, als ob er einheitlich mit Lichtauskoppelelementen besetzt wäre.

Bei einer Innenleuchte kann vorgesehen sein, daß der besagte Teilbereich der Lichtauskoppelfläche zumindest in bestimmten Richtungen in einem Abstand einheitlich leuchtend erscheint, der in einem Bereich von 0,5 m bis 4 m liegen kann und gemäß einer besonderen Ausführungsform weniger als 4 m, vorzugsweise weniger als 2 m und gemäß einer speziellen Ausführungsform 1,5 m oder mehr beträgt. Für Deckenleuchten, z.B. Pendelleuchten, Einbauleuchten oder Anbauleuchten, kann dieser Minimalabstand beispielsweise größer oder gleich 1,5 m sein. Dies entspricht ungefähr dem minimalen Abstand, unter dem diese Leuchten wahrgenommen werden. Für Tisch- oder Stehleuchten kann dieser Mindestabstand 0,5 m oder mehr betragen.

Die Erfindung kann auch vorsehen, daß zumindest auf einem Teilbereich der Lichtauskoppelfläche in einem Abstand von einem Lichtauskoppelement, der weniger als 2 cm, bevorzugt weniger als 1 cm und besonders bevorzugt von weniger als 0,5 cm beträgt, ein Lichtauskoppelement mit anderen lichtlenkenden Eigenschaften liegt.

Die Erfindung kann vorsehen, daß zumindest auf einem Teilbereich der Lichtauskoppelfläche zumindest in einer Richtung auf ein Lichtauskoppelement nach spätestens 100 weiteren Lichtauskoppelementen, vorzugsweise von

weniger als 20 Lichtauskoppelementen und besonders bevorzugt von weniger als 5 Lichtauskoppelementen ein Lichtauskoppelement mit anderen lichtlenkenden Eigenschaften folgt.

Die Richtung des in den Lichtleiter eingekoppelten Lichtes ist vorzugsweise zumindest im wesentlichen parallel oder schräg zu der Lichtauskoppelseite, nicht aber senkrecht zu dieser. In einer bevorzugten Ausführungsform der Erfindung grenzt die Lichteinkoppelseite unmittelbar an die Lichtauskoppelseite an und schließt mit dieser einen nicht verschwindenden Winkel, vorzugsweise 90° ein. Die Lichtauskoppelfläche kann eine Grundfläche des Lichtleiters ganz oder teilweise ausfüllen und die Lichteinkoppelseite kann eine von einer Grundfläche verschiedene Seitenfläche sein.

Die Erfindung kann vorsehen, daß auf einer Lichtauskoppelfläche zumindest ein Teil der Lichtauskoppelelemente bezüglich einer zu der Lichtauskoppelfläche senkrecht stehenden Ebene symmetrisch ist und ein weiterer Teil der Lichtauskoppelelemente keine Symmetrie zu einer solchen Ebene aufweist, also asymmetrisch ist.

Die Erfindung kann auch vorsehen, daß zumindest ein Teil der Lichtauskoppelelemente an einem freien Ende zwei einander gegenüberliegende und zueinander geneigte Flächen aufweist, wobei der Öffnungswinkel, in dem diese beiden Flächen, bezogen auf einen Schnitt in einer Ebene senkrecht zu der Lichtauskoppelfläche, zueinander geneigt sind, für einen Teil dieser Lichtauskoppelelemente verschieden von dem Öffnungswinkel anderer Lichtauskoppelelemente ist.

Die beiden besagten Flächen können, müssen aber nicht aneinander angrenzen. In letzterem Fall können sie durch eine oder mehrere gerade oder schräge Zwischenflächen voneinander getrennt sein. Beispielsweise können die Lichtauskoppelelemente eine Pyramidenform, etwa mit einer viereckigen oder sechseckigen Grundfläche, oder eine Kegelform, aber auch eine Pyramidenstumpfform oder eine Kegelstumpfform aufweisen. Der Öffnungswinkel wäre dann im Falle eines Pyramidenstumpfs oder eines Kegelstumpfs de. Winkel zwischen den beiden Flächen an der Spitze der Pyramide oder des Kegels, der sich ergibt, wenn man den Kegelstumpf bzw. Pyramidenstumpf zu einer vollständigen Pyramide bzw. zu einem vollständigen Kegel ergänzt. Im Falle einer Pyramide bzw. eines Kegels wäre dieser Winkel der Winkel zwischen den Flächen an der Spitze der Pyramide bzw. des Kegels.

Es kann vorgesehen sein, daß zumindest ein Teil der Lichtauskoppelelemente linienförmige, insbesondere geradlinige Prismen sind.

Diese Prismen können insbesondere einen dreieckigen Querschnitt, einen trapezförmigen Querschnitt oder einen mehreckigen Querschnitt aufweisen. Grundsätzlich sind auch Prismen mit gekrifmmten Seitenwänden verwendbar.

Die Erfindung kann auch vorsehen, daß zumindest auf einem Teilabschnitt der Lichtauskoppelfläche alle Lichtauskoppelelemente die gleiche Grundform, aber verschiedene Abmessungen und/oder Winkel zwischen den Außenflächen aufweisen.

Die Erfindung kann insbesondere vorsehen, daß zumindest auf einem Teilabschnitt der Lichtauskoppelfläche die Lichtauskoppelemente Prismen, insbesondere linienförmige Prismen sind, welche den gleichen Öffnungswinkel zwischen den Außenflächen, aber unterschiedliche Neigungen der Außenflächen aufweisen. So können z.B. asymmetrische Prismen mit gleichem Prismenwinkel und unterschiedlich langen Seiten verwendet werden.

Es kann vorgesehen sein, daß die Lichtauskoppeleinrichtung zumindest über einem Teilbereich der Lichtauskoppelfläche in einer Ebene senkrecht zu der Lichtauskoppelfläche eine Abschirmung derart erzeugt, daß oberhalb eines bestimmten Grenzwinkels (Abschirmwinkels) zu einer Senkrechten zu der Lichtauskoppelfläche die Leuchtdichte unter einen vorbestimmten Grenzwert fällt.

Dieser Grenzwert, der für die Leuchte insgesamt nicht überschritten werden soll, kann entsprechend den derzeit einschlägigen Normen oder Normvorschläge z. B. 200 cd/m$^2$, 500 cd/m$^2$ oder 1000 cd/m$^2$ betragen. Der Grenzwinkel kann, je nach der lichttechnischen Anforderung, in einem Bereich von 40° bis 85°, vorzugsweise 45° bis 70° und besonders bevorzugt von 50° bis 65° liegen.

Wird eine Lichtauskoppelfläche einheitlich mit identischen Prismen bestückt, gibt es bestimmte Relationen zwischen den Prismenparametern und den Abschirmungsparametern. Für dreieckförmige linienförmige Prismen kann beispielsweise bei einem Hohllichtleiter eine Abschirmung erzeugt werden, wenn

$$w/2 \leq C \tag{1}$$

$$w \geq 2\,(2 \arcsin\,(1/n) + 90)\,/\,3 \tag{2}$$

und

$$\tan(w/2) \leq (n \sin (\arcsin (1/n) - 3\ w/2) + \cos(w/2))\ /$$

$$(n \cos(\arcsin (1/n) - 3\ w/2) + \sin(w/2)) \qquad\qquad (3)$$

wobei C der Abschirmwinkel, w der Öffnungswinkel oder Spitzenwinkel der Prismen und n der Brechungsindex des Prismenmaterials ist.

Die Erfindung kann für eine insgesamt abgeschirmte Leuchte vorsehen, daß ein Teil der Prismen den Bedingungen für die Abschirmung, beispielsweise den vorangehend genannten Kriterien (1) bis (3) nicht entspricht, solange der besagte Grenzwert der Leuchtdichte oberhalb des Abschirmwinkels eingehalten wird. Diese den Kriterien nicht entsprechenden Lichtauskoppelelemente sind dann in so geringer Zahl vorhanden, daß ihr Beitrag zu der Leuchtdichte oberhalb des Grenzwinkels nicht zu einer Überschreitung des Grenzwertes der Leuchtdichte führt.

Eine erfindungsgemäße Leuchte kann auch eine Abschirmung in mehr als einer Ebene senkrecht zu der Lichtaustrittsfläche aufweisen, insbesondere eine Abschirmung in zwei zueinander senkrecht stehenden Ebenen oder eine Rundumabschirmung in beliebigen Ebenen senkrecht zu der Lichtaustrittsfläche, wobei der entsprechende Grenzwinkel oder Abschirmwinkel und/oder der zugehörige Grenzwert der Leuchtdichte in verschiedenen Ebenen verschieden sein kann.

Die Erfindung kann auch vorsehen, daß in der Lichtauskoppeleinrichtung ein erster Prismentyp, welcher eine erste Leuchtdichteverteilungskurve des ausgekoppelten Lichtes erzeugt, und ein zweiter Prismentyp, welcher eine zweite, von der ersten verschiedene Leuchtdichteverteilungskurve des ausgekoppelten Lichtes erzeugt, vorgesehen sind, derart, daß in einer Ebene senkrecht zur Lichtauskoppelfläche ein Minimum der ersten Leuchtdichteverteilungskurve durch einen Bereich der zweiten Leuchtdichteverteilungskurve überlagert wird, der kein Minimum aufweist, so daß die Leuchtdichteverteilungskurve der Leuchte insgesamt vergleichmäßigt wird.

Die Leuchtdichteverteilungskurve der Leuchte insgesamt kann auch dadurch gestaltet werden, daß ein lokales oder globales Maximum der einen Leuchtdichteverteilungskurve mit einem lokalen oder globalen Minimum der anderen Leuchtdichteverteilungskurve überlagert wird. Ein weiterer Parameter zur Gestaltung der Leuchtdichteverteilungskurve ist das Verhältnis der Anzahl der Lichtauskoppelelemente vom ersten und vom zweiten Prismentyp. Je nachdem, ob ein Prismentyp stärker oder weniger stark vertreten ist, wird sein Beitrag zu der Gesamtleuchtdichteverteilungskurve größer oder kleiner sein. Der Einfluß eines unerwünschten Maximums oder Minimums der Leuchtdichteverteilungskurve kann daher auch dadurch begrenzt werden, daß die Anzahl der zugehörigen Prismen reduziert wird und damit der Anteil der zugehörigen Leuchtdichteverteilungskurve an der Gesamtlichtstärkeverteilungskurve reduziert wird.

Durch die Verwendung verschiedener Prismen mit unterschiedlicher Lichtauskoppelcharakteristik ist es daher möglich, in der Lichtauskoppeleinrichtung die Leuchtdichteverteilungskurve der Leuchte stärker als bisher zu gestalten und insbesondere Ungleichmäßigkeiten, die sich für einen Benutzer oder Betrachter störend auswirken könnten, auszugleichen, indem die von zwei verschiedenen Prismentypen ausgekoppelten Lichtanteile überlagert werden. Letztendlich werden dabei zwei Leuchtdichteverteilungskurven miteinander überlagert, wobei die eine die Erhebungen und/oder Senken der anderen ausgleicht. Wenn eine möglichst gleichmäßige Leuchtdichteverteilungskurve gewünscht ist, sind lokale Minima der Leuchtdichteverteilungskurven idealerweise so versetzt, daß das lokale Minimum der einen Leuchtdichteverteilungskurve in einem Bereich liegt, indem die andere Leuchtdichteverteilungskurve einen großen Wert bzw. ein lokales oder globales Maximum aufweist. Auf diese Weise lassen sich auch Maxima der Leuchtdichte, die für die Bewertung der Leuchtdichte relevant sind, abbauen.

Beispielsweise kann vorgesehen sein, daß, insbesondere bei einer abgeschirmten Leuchte, auf diese Weise Maxima und/oder Minima der Leuchtdichte oberhalb eines Winkels von 45° oder eines größeren Winkels zu einer Senkrechten zu der Lichtaustrittsfläche in einer Ebene senkrecht zu der Lichtaustrittsfläche vergleichmäßigt werden.

Die vorangehend für die Leuchtdichteverteilungskurven beschriebenen Verhältnisse können entsprechend auch für die Lichtstärkeverteilungskurven gelten.

Die Erfindung kann auch vorsehen, daß Maxima und/oder Minima der Leuchtdichte, insbesondere scharfe Maxima oder Minima, in einer oder mehreren Raumebenen, die bei Verwendung eines einzigen Prismentyps auftreten können, durch das Vorsehen von zwei oder mehr Prismentypen, deren Leuchtdichteverteilungen sich überlagern und deren Minima und Maxima sich z. B. zumindest teilweise gegenseitig kompensieren, vergleichmäßigt wird. Diese Ebenen können beliebig im Raum liegen und können z.B. vertikal, horizontal oder schräg im Raum liegen. Auf diese Weise kann der eingangs erwähnte scheinbare "Blinkeffekt" reduziert oder beseitigt werden, der sich bei scharfen Maxima oder Minima der Leuchtdichte bei einer Bewegung des Betrachters im Raum ergibt, die ihrerseits horizontal, vertikal oder schräg sein kann.

Die Erfindung kann auch vorsehen, daß die Dichte der verschiedenen Lichtauskoppelelemente über der Lichtauskoppelfläche oder einem Teil davon konstant ist.

Mit der Dichte der Lichtauskoppelemente eines Typs ist die mittlere Anzahl von Prismen dieses Typs pro Einheitsfläche gemeint.

Es kann vorgesehen sein, daß die Lichtauskoppelfläche zumindest zwei Bereiche aufweist, in denen die Dichte der Lichtauskoppelemente eines Typs verschieden ist.

Es kann dabei beispielsweise vorgesehen sein, daß mehrere derartige Bereiche vorgesehen sind, in denen der Anteil bzw. die Dichte eines bestimmten Prismentyps von einem Bereich zum nächsten ab- oder zunimmt oder sich anderweitig, z. B. periodisch verändert.

In einer Ausführungsform weist die Lichtauskoppeleinrichtung verschiedene Bereiche auf, welche jeweils mit einheitlich ausgebildeten Lichtauskoppelementen besetzt sind, wobei der Lichtleiter bei dieser Ausführungsform insbesondere ein Vollichtleiter sein kann.

Auf diese Weise werden auf der Lichtauskoppelfläche Bereiche erzeugt, die jeweils ein ganz bestimmtes Lichtverhalten bewirken. Beispielsweise kann, wenn ein solcher Bereich am Rand vorgesehen ist, dieser Licht mit einer tiefstrahlenden Lichtstärkeverteilungskurve, z. B. zur Beleuchtung einer Wand oder dergleichen, abgeben, während der mittlere Bereich Licht mit einer abgeschirmten Lichtstärkeverteilungskurve abgibt.

Die Erfindung kann vorsehen, daß ein Teilbereich der Lichtaustrittsfläche der Leuchte für einen Beobachter zumindest unter einem Blickwinkel sich hinsichtlich seiner Helligkeit von benachbarten Bereichen abhebt.

Diese helleren oder dunkleren Bereiche werden dadurch herbeigeführt, daß in diesen Bereichen andere Prismen als in den benachbarten Bereichen vorgesehen sind. Die dadurch erzeugten Lichteffekte können als dekorative Effekte verwendet werden, aber auch zur Information, z. B. zur Wegführung dienen. Beispielsweise kann die Prismenstruktur so ausgebildet sein, daß in einem Bereich, der einem Streifen, einem Pfeil oder dergleichen entspricht, die Prismen anders ausgestaltet sind als in der Umgebung, so daß ein Betrachter unter einem bestimmten Blickwinkel einen Streifen, einen Pfeil oder dergleichen sieht, der sich von einer hellen bzw. dunklen Umgebung abhebt.

Die Erfindung kann vorsehen, daß Lichtauskoppelelemente mit unterschiedlichen Eigenschaften zumindest auf einem Teilbereich der Lichtkoppelfläche statistisch verteilt sind.

Es kann vorgesehen sein, daß sich zumindest auf einem Teilbereich der Lichtauskoppelfläche eine Anordnung von Lichtauskoppelelementen verschiedenen Typs periodisch in ein oder zwei Richtungen über der Lichtauskoppelfläche wiederholt.

Beispielsweise kann vorgesehen sein, daß die Lichtauskoppelfläche zumindest teilweise in Teilbereiche gleicher Größe, beispielsweise Quadrate oder Rechtecke unterteilt ist, in denen die Abfolge der Prismen jeweils identisch ist, derart, daß durch Translation durch einen bzw. zwei nicht kolineare Basisvektoren vorgegebener Länge ein solcher Bereich mit einem anderen Bereich identisch zur Deckung gebracht werden kann oder, allgemeiner gesprochen, daß die Lichtauskoppelfläche (abgesehen von Randeffekten) gegenüber solchen Translationen invariant ist, ebenso wie dies z. B. bei einem Gitter in einem Festkörper der Fall ist.

Die Erfindung kann insbesondere vorsehen, daß Lichtauskoppelelemente verschiedener Ausgestaltung sich in einer bestimmten Sequenz in einer bestimmten Richtung wiederholen, wobei diese Sequenz ein oder mehrere Exemplare jedes Prismentyps aufweist. Sind nur zwei Prismentypen vorhanden, könnte eine solche Sequenz beispielsweise eine alternierende Sequenz sein (121212...), aber auch eine kompliziertere Sequenz, z. B. 1221112211...). Bei drei Prismentypen könnte eine einfache Sequenz beispielsweise derart aussehen, daß drei Prismen unterschiedlichen Typs aufeinanderfolgen (123123...). Auch hier sind kompliziertere Sequenzen (z. B. 123322123322...) möglich.

In einer besonderen Ausführungsform können zwei Typen von symmetrischen Prismen, insbesondere linienförmige Prismen mit einem dreieckigen Querschnitt, verwendet werden, bei denen der Öffnungswinkel an der Spitze der Prismen bei dem einen Typ 116° und bei dem anderen Typ 120° beträgt. Diese Prismen können abwechselnd angeordnet sein, so daß sich eine Lichtstärkeverteilungskurve, die mit Prismen mit einem Öffnungswinkel von 116° erzeugt wird, einer Lichtstärkeverteilungskurve, die mit Öffnungswinkeln von 120° erzeugt wird, im Verhältnis 1:1 überlagert wird. Prismen können auch abwechselnd periodisch, in Gruppen oder statistisch angeordnet sein. Es kann natürlich auch vorgesehen sein, daß bei derselben Grundform, z. B. bei einer Grundform in Form von linienförmigen Prismen mit einem dreieckigen Querschnitt, drei oder mehr verschiedene Öffnungswinkel der einzelnen Prismen vorgesehen sind.

Die Anordnung der verschiedenen Lichtauskoppelemente muß nicht notwendig statistisch oder periodisch sein. Generell kann vorgesehen sein, daß zumindest auf einem Teilbereich der Lichtauskoppelfläche ein Parameter der Lichtauskoppelemente einer nicht konstanten Funktion folgt. Diese Funktion kann beispielsweise ein Stufenfunktion, eine monoton oder streng monoton abnehmende oder zunehmende Funktion, ein Polynom oder dgl. mehr sein.

Der Lichtleiter kann ein Hohllichtleiter oder ein Vollichtleiter sein.

Die Erfindung kann vorsehen, daß die Lampe bzw. die Lampen außerhalb des Lichtleiters angebracht sind und vorzugsweise von einer Seite aus Licht in den Lichtleiter einkoppelt.

Sofern die Lampe in dem Lichtleiter oberhalb der Lichtauskoppelfläche angeordnet ist, kann eine Einrichtung vorgesehen sein, welche den direkten Lichteinfall von der Lampe auf die Lichtauskoppeleinrichtung verhindert oder reduziert, z.B. ein Sekundärspiegel unterhalb der Leuchte, eine lichtundurchlässige oder teilweise lichtdurchlässige Beschichtung auf einer Platte mit Lichtauskoppelelementen oder dgl..

Sofern der Lichtleiter ein Hohllichtleiter ist, kann vorgesehen sein, daß eine Wand gegenüber der Lichtauskoppeleinrichtung vorgesehen ist, welche gemäß bestimmten Ausführungsformen als diffus reflektierender oder gerichtet reflektierender Reflektor ausgebildet sein kann.

Abgesehen davon, daß mit der erfindungsgemäßen Leuchte die eingangs beschriebene Unregelmäßigkeiten der Lichtstärkeverteilungskurve bzw. der Leuchtdichtekurve vergleichmäßigt werden können und damit für den Betrachter ein gleichmäßigeres und ruhigeres Erscheinungsbild der Leuchte entsteht, können mit einer erfindungsgemäßen Leuchte auch Lichteffekte erzielt werden, die über die Möglichkeiten mit konventionellen Lichtleiterleuchten hinausgehen. Insbesondere können unterschiedliche Lichtabstrahlcharakteristiken innerhalb einer einzigen Leuchte mit einer einzigen Lampe und/oder einer einzigen Lichtaustrittsfläche realisiert werden. Beispielsweise kann eine erfindungsgemäße Leuchte in einem Bereich tiefstrahlend wirken, um beispielsweise Objekte anzuleuchten, und in einem anderen Bereich wie eine abgeschirmte Innenraumleuchte.

Weiteren Vorteile und Merkmale der Erfindung ergeben sich aus der nachfolgenden Beschreibung eines Ausfiihrungsbeispiels einer erfindungsgemäßen Vorrichtung anhand der beigefügten Zeichnungen.

Fig. 1     zeigt eine perspektivische Ansicht eines Ausführungsbeispiels einer erfindungsgemäßen Leuchte,

Fig. 2     zeigt einen Querschnitt der Leuchte gemäß Fig. 1 senkrecht zu der Lampenachse und illustriert den Strahlengang des von der Lampe abgestrahlten Lichts,

Fig. 3     zeigt eine erste Ausgestaltung einer Lichtauskoppelplatte, welche bei einer erfindungsgemäßen Leuchte verwendet werden kann,

Fig. 4     zeigt eine zweite alternative Ausgestaltung einer erfindungsgemäß verwendbaren Lichtauskoppelplatte,

Fig. 5     zeigt eine dritte Ausführungsform einer erfindungsgemäß verwendbaren Lichtauskop* pelplatte,

Fig. 6     zeigt eine perspektivische Ansicht von zwei rillenförmig strukturierten Prismenplatten zum Auskoppeln von Licht aus dem Lichtleiter.

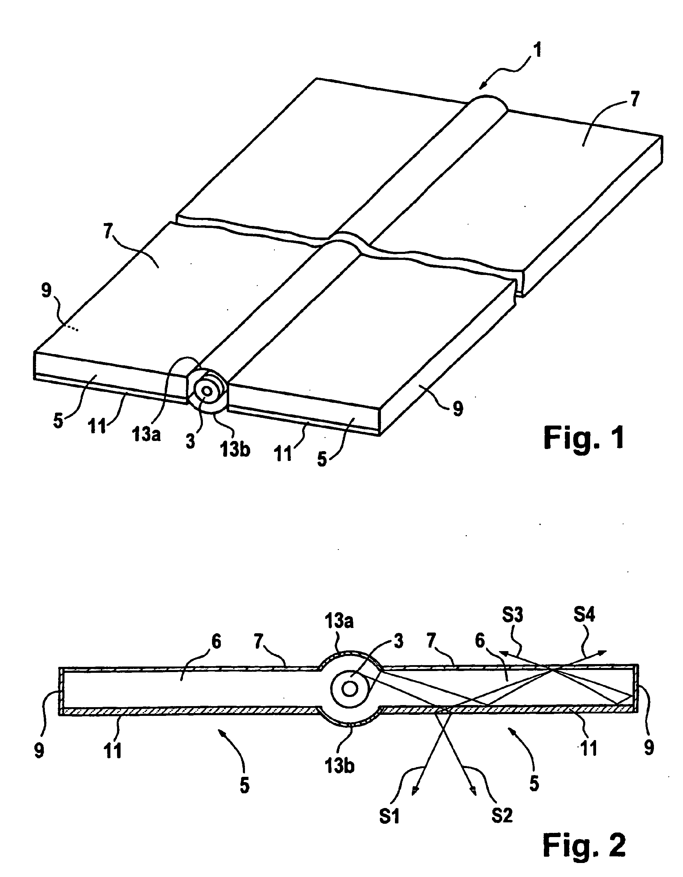

Die in Fig. 1 gezeigte Leuchte ist eine Innenraumleuchte, die insbesondere als Hängeleuchte ausgebildet sein kann und allgemein mit 1 bezeichnet ist. Bei dieser Leuchte ist eine Leuchtstofflampe 3 in der Mitte zwischen zwei Hohllichtleitem 5 mit jeweils einem Hohlraum 6 angeordnet, der, wie aus Fig. 2 ersichtlich, auf der der Lampe 3 zugewandten Schmalseite offen ist. Der Hohlraum 6 wird oben durch eine teilweise reflektierende Dachfläche 7, seitlich durch reflektierende Seitenwände 9 und unten durch eine Lichtauskoppeleinrichtung 11 begrenzt, welche nachfolgend näher beschriebene lichtbrechende Strukturen zum Auskoppeln von Licht aus dem Lichtleiter 5 aufweist. Die Lampe 3 ist oben und unten von einem Reflektor 13a bzw. 13b umgeben, welcher vorzugsweise so ausgestaltet ist, daß das Licht der Lampe 3 nahezu vollständig in die beiden Hohllichtleiter 5 eingekoppelt wird.

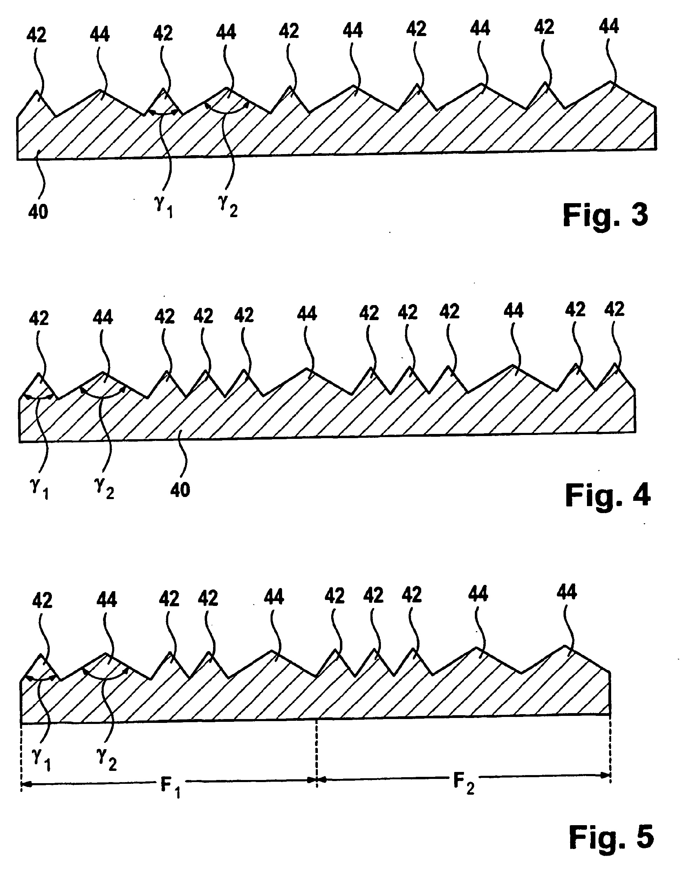

Die Lichtauskoppeleinrichtung 11 dieses Ausführungsbeispiels ist in Fig. 3 in einer schematischen Schnittansicht näher dargestellt. Sie besteht aus einer Lichtauskoppelplatte 40, die jeweils an der der Seite des Lichteinfalls gegenüberliegenden Seite eine Prismenstruktur mit satteldachförmigen Prismen 42 und 44 aufweist. Diese Prismen werden durch gerade, rillenförmige Vertiefungen voneinander getrennt. Der Schnitt in Fig. 3 ist senkrecht zu der Längsrichtung der Rillen. Wie man anhand der Zeichnung erkennt, haben die Prismen 42 und 44 zwar die gleiche Grundform, nämlich die eines länglichen Prismas mit dreieckigem Querschnitt, weisen aber verschiedene Öffnungswinkel $\gamma_1$ bzw. $\gamma_2$ auf. Die Prismen 42 und 44 sind alternierend angeordnet, d. h. auf ein Prisma 42 folgt immer ein Prisma 44 und auf dieses wiederum folgt immer ein Prisma 42. Die Prismenstruktur ist also in der Richtung quer zu der Längsrichtung der Prismen periodisch mit einer Periode von zwei Prismen. Der besseren Anschaulichkeit halber ist die Prismenplatte in Fig. 3 so dargestellt, daß die Prismen, die nach außen, also zur Lichtaustrittsseite weisen, nach oben gerichtet dargestellt sind. Die Breite der Prismen beträgt gemäß den derzeit bevorzugten Ausführungsformen ca. 0,01 bis 40 mm, bevorzugt 0,05 mm bis 10 mm und besonders bevorzugt 0,1 bis 5 mm. Die Platte 40 besteht aus einem leicht bearbeitbaren lichtdurchlässigen Material, z. B. Acrylglas oder Polycarbonat.

Licht, das auf die Prismen 42 einfällt, wird anders gebrochen als Licht, das auf die Prismen 44 einfällt. Die Prismen 42 besitzen beispielsweise einen Öffnungswinkel $\gamma_1$ von etwa 70°, während die Prismen 44 einen Öffnungswinkel $\gamma_2$ von etwa 116° aufweisen. Wenn die Platte 40 aus Acrylglas besteht, erzeugen die Prismen 42, in einer Ebene senkrecht zu der Längsrichtung der Prismen, jeweils für sich eine lokale Lichtstärkeverteilungskurve, welche tiefstrahlend ist und ein steil nach unten gerichtetes Maximum aufweist. Die Prismen 44 erzeugen demgegenüber, jeweils in einer Ebene senkrecht zu ihrer Längsachse, eine bei einem Winkel von etwa 60° abgeschirmte lokale Lichtstärkeverteilung. Aufgrund der dichten Anordnung der Prismen überlagern sich diese lokalen Lichtstärkeverteilungen für einen Betrachter, der sich in einem aureichenden Abstand von der Leuchte, etwa 1 m bis 1,5 m befindet, zu einer über der Platte 40 Gesamtlichtstärkeverteilung, die sich aus einer Überlagerung der Lichtstärkeverteilungskurven, die jeweils von den Prismen 42 und 44 erzeugt werden, zu gleichen Teilen zusammensetzt.

Die Prismen 42 und 44 beeinflussen vor allem die Lichtstärkeverteilungskurve in der Richtung senkrecht zu der Längsrichtung der Prismen.

Die Wirkungsweise des Hohllichtleiters 5 ist in Fig. 2 anhand beispielhafter Strahlengänge illustriert. Für einen Teil der Lichtstrahlen (vgl. Lichtstrahl S1) wird das direkt auf die Lichtauskoppeleinrichtung 11 anfallende Licht über die Prismen 42 und 44 der Platte 40 direkt ausgekoppelt. Für emen weiteren Teil des Lichts (vgl. Lichtstrahl S2) wird das Licht an der Prismenstruktur in den Hohlraum 6 hinein zurückreflektiert, anschließend an der Dachfläche 7 und der Seitenwand 9 reflektiert und gelangt dann wieder zu der Lichtauskoppeleinrichtung 11, wo es durch die Prismenplatte 40 ausgekoppelt wird. Die Dachfläche ist teilweise transparent, so daß ein Teil des im Hohllichtleiter 5 umlaufenden Lichts an der Dachfläche 7 ausgekoppelt wird, was durch die Lichtstrahlen S3 und S4 angedeutet ist. Die Dachfläche 7 kann auch in anderer Weise, z. B. diffus strahlend oder vollständig reflektierend ausgebildet sein oder in verschiedenen Bereichen unterschiedliche Reflexions- und Transmissionseigenschaften besitzen.

Die Anordnung von Prismen auf der Platte 40 in Fig. 3 ist nur ein Beispiel für eine mögliche Anordnung.

Eine andere periodische Anordnung der Prismen 42 und 44 in einer Prismenplatte, die bei einer erfindungsgemäßen Leuchte verwendet werden kann, ist beispielhaft in einem Querschnitt in Fig. 4 illustriert. Der Einfachheit halber sind die beiden Prismentypen, die auf dieser Platte vorgesehen sind, dieselben wie in Fig. 3 und daher auch mit denselben Bezugszeichen bezeichnet. Es ist jedoch klar, daß auch Prismen mit vollständig anderen Parametern verwendet werden könnten. Die Anordnung in Fig. 4 ist periodisch mit einer Periode von vier Prismen, wobei eine Periode aus einem Prisma 42, gefolgt von einem Prisma 44 und dieses wiederum gefolgt von zwei Prismen 42 besteht. Man erkennt, daß sich das Prismenmuster alle vier Prismen wiederholt.

Die Anordnung der Prismen muß jedoch nicht periodisch sein. Sie kann vielmehr auch statistisch sein. Eine solche Anordnung ist in Fig. 5 dargestellt, die wiederum in einem schematischen Querschnitt eine Prismenplatte zeigt, die bei einer erfindungsgemäßen Leuchte eingesetzt werden kann. Auch hier sind die Prismentypen dieselben wie in Fig. 3 und 4 und mit denselben Bezugszeichen bezeichnet. Wie in der Figur angedeutet, weist die Anordnung der Prismen keine Periodizität auf. Betrachtet man jedoch Einheitsbereiche von fünf Prismen, die in Fig. 5 mit $F_1$ und $F_2$ bezeichnet sind, so erkennt man, daß jeder dieser Bereiche die gleiche Anzahl von Prismen 42 und 44 aufweist. In Bereichen, in denen die Prismenstruktur von dem Auge eines Betrachters nicht mehr aufgelöst wird, wirken die Bereiche $F_1$ und $F_2$ gleichförmig hell, so daß ein Betrachter beim Betrachten der Lichtaustrittsfläche der Leuchte keine Unterschiede in der Leuchtdichte feststellt. Die Prismen 42 bewirken jedoch, daß in dem Bereich kleiner Winkel zur Senkrechten die Lichtstärkeverteilungskurve der Leuchte insgesamt verstärkt wird. Mit einer solchen Anordnung kann also die Lichtstärkeverteilungskurve weitergehend als bisher gestaltet werden, ohne daß dies dem Betrachter als Unregelmäßigkeit der Lichtaustrittsfläche auffällt.

Eine solche Unregelmäßigkeit kann jedoch unter Umständen auch gewünscht sein. Beispielsweise kann bei einer Abwandlung der Ausführungsforin der Fig. 5 eine andere statistische Verteilung der Prismen 42 und 44 vorgesehen sein, derart, daß unter bestimmten Blickwinkeln der Betrachter den Bereich $F_2$ dunkler als den Bereich $F_1$, wahrnimmt. Zum Beispiel könnte in einer Abwandlung der in Fig. 5 gezeigten Konfiguration vorgesehen sein, daß der Bereich $F_2$ mehr Prismen des Typs 42 aufweist als der Bereich $F_1$, ein Bereich rechts neben dem Bereich $F_2$ ausschließlich Prismen vom Typ 42 aufweist und ein Bereich links von dem Bereich $F_1$ ausschließlich Prismen vom Typ 44 aufweist. Der Betrachter wird dies als einen graduellen Übergang von der Helligkeit zwischen verschiedenen Bereichen wahrnehmen, während er die Unregelmäßigkeit der Prismen innerhalb eines Bereiches, wie $F_1$ und $F_2$, wenn er sich weit genug von der Leuchte entfernt befindet, nicht auflöst.

Während bei den vorangehend beschriebenen Ausführungsbeispielen nur eine Lichtauskoppelplatte 40 vorgesehen ist und die dort vorgesehenen Prismen den Lichtaustritt im wesentlichen in einer Richtung senkrecht zu ihrer Längsrichtung beeinflussen, kann die Erfindung auch Ausführungsformen vorsehen, welche den Lichtaustritt in mehreren Richtungen, insbesondere in zwei zueinander senkrechten Richtungen beeinflussen. Hierfür können statt linienförmigen Prismen pyramidenförmige Prismen verwendet werden, die sich z.B. ergeben, wenn man in eine Kunststoffplatte Rillen mit einem dreieckförmigen Querschnitt in zwei zueinander orthogonalen Richtungen einbringt. Derartige Prismen sind beispielsweise aus US-PS 5 555 109 oder US-PS 5 396 350 bekannt sind, auf welche insoweit im Wege der Bezugnahme hinsichtlich weiterer Einzelheiten, insbesondere hinsichtlich der Ausbildung und/oder Anbringung an einer lichtdurchlässigen Platte oder einem Lichtleiter verwiesen wird. Eine andere Möglichkeit, eine Abschirmung in mehreren Ebenen zu erreichen, besteht, insbesondere bei Vollichtleitern, in der Verwendung von linienförmigen Prismenstrukturen, deren Breite zu dem Lichtleiter hin abnimmt und die vorzugsweise mit ihrer breiten Seite von dem Lichtleiter weg weisen, insbesondere linienförmige Prismen mit einem trapezförmigen Querschnitt. Derartige Prismen sind beispielsweise in der deutschen Patentanmeldung 199 63 685.0 offenbart, auf welche insoweit im Wege der Bezugnahme hinsichtlich weiterer Einzelheiten, insbesondere hinsichtlich der Ausbildung und/oder Anbringung an einer lichtdurchlässigen Platte oder einem Lichtleiter verwiesen wird. Man kann jedoch auch zwei Lichtauskoppelplatten, jeweils mit linienförmigen Prismen, verwenden. Dies wird anhand des nachfolgend beschriebenen Ausführungsbeispiels näher erläutert.

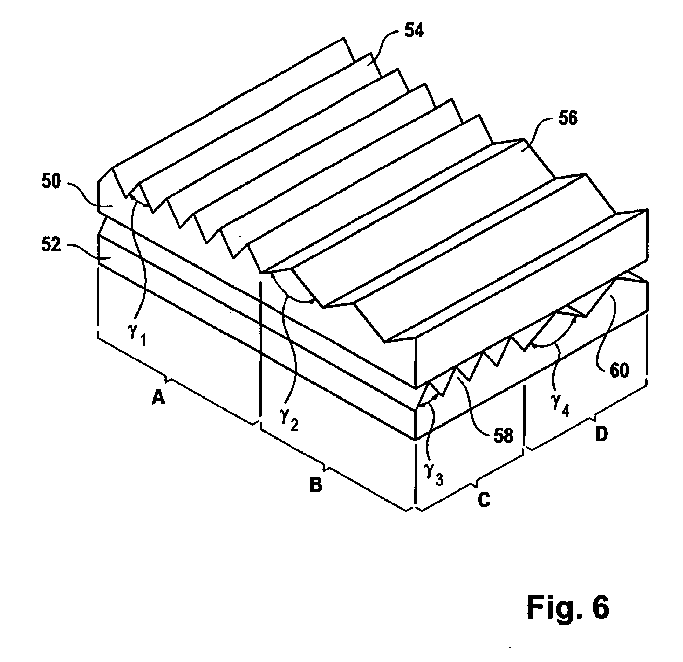

Die Lichtauskoppeleinrichtung 11 dieses Ausführungsbeispiels ist in Fig. 6 in einer perspektivischen Ansicht näher dargestellt. Sie besteht aus zwei Lichtauskoppelplatten 50 und 52, die jeweils an der Seite des Lichteinfalls gegenüberliegenden Seite eine Prismenstruktur mit satteldachförmigen Prismen 54 und 56 bzw. 58 und 60 aufweisen. Diese Prismen werden durch gerade, rillenförmigen Vertiefungen voneinander getrennt. Die Kantenlinien der Prismen 54 und 56 stehen senkrecht auf den Kantenlinien der Prismen 58 und 60. Der besseren Anschaulichkeit halber sind die Prismenplatten in Fig. 6 so dargestellt, daß die Prismen, die nach außen, also zur Lichtaustrittsseite, weisen, nach oben gerichtet dargestellt sind. Die Breite der Prismen beträgt gemäß den derzeit bevorzugten Ausführungsformen ca. 0,01 bis 40 mm, bevorzugt 0,05 mm bis 10 mm und besonders bevorzugt 0,1 bis 5 mm. Die Platten 50 und 52 bestehen aus einem leicht bearbeitbaren lichtdurchlässigen Material, z. B. Acrylglas oder Polycarbonat. Wie man anhand der Zeichnungen erkennt, haben die Prismen 54 und 56 zwar die gleiche Grundform, nämlich die eines länglichen Prismas mit dreieckigem Querschnitt, weisen aber verschiedene Öffnungswinkel $\gamma_1$ bzw. $\gamma_2$ auf. Entsprechendes gilt für die Prismen 58 und 60 sowie ihre Öffnungswinkel $\gamma_3$ und $\gamma_4$. Der Bereich der Platte 50, der mit den Prismen 54 besetzt ist, ist mit A bezeichnet, der Bereich in der Platte 50, der mit den Prismen 56 besetzt ist, ist mit B bezeichnet, der Bereich der Platte 52, der mit den Prismen 58 besetzt ist, mit C und der Bereich der Platte 52, der mit den Prismen 60 besetzt ist, mit D.

Licht, das auf die Platte 50 in dem Bereich A einfällt, wird anders gebrochen als Licht, das in den Bereich B einfällt. Dies führt in der Konsequenz zu einer unterschiedlichen Lichtstärkeverteilungskurve des Lichts, das aus den Bereichen A und B bzw. C und D austritt. Die Prismen 54 und 58 besitzen beispielsweise einen Öffnungswinkel $\gamma_1$ bzw. $\gamma_3$ von etwa 70°, während die Prismen 56 und 60 einen Öffnungswinkel $\gamma_2$ bzw. $\gamma_4$ von etwa 116° aufweisen. Wenn die Platten 50 und 52 aus Acrylglas bestehen, erzeugen die Prismen 54 und 58, jeweils in einer Ebene senkrecht zu der Längsrichtung der Prismen, eine Lichtstärkeverteilungskurve, welche tiefstrahlend ist und ein steil nach unten gerichtetes Maximum aufweist. Die Prismen 56 und 60 erzeugen demgegenüber, jeweils in einer Ebene senkrecht zu ihrer Längsachse, eine bei einem Winkel von etwa 60° abgeschirmte Lichtstärkeverteilung.

Die Prismenplatten 50 und 52 beeinflussen vor allem die Lichtstärkeverteilungskurve in der Richtung senkrecht zu der Längsrichtung der Prismen.

Die Wirkungsweise des Hohllichtleiters 5 ist bei dieser Ausführungsform dieselbe, wie sie vorangehend mit Bezug auf Fig. 2 erläutert wurde, nur daß die Lichtauskoppeleinrichtung 11 in diesem Fall aus zwei Lichtauskoppelplatten 50 und 52 besteht, durch welche das Licht hindurchtreten muß, um aus der Leuchte auszutreten.

Bei der Lichtauskoppeleinrichtung gemäß Fig. 6 ergeben sich nun vier verschiedene Bereiche mit jeweils unterschiedlichen Lichtstärkeverteilungskurven. In dem Bereich der Überlagerung der Bereiche A und C wird eine allseits tiefstrahlende Lichtstärkeverteilungskurve erzeugt. Im Bereich der Überlagerung der Bereiche B und C bzw. A und D wird eine Lichtstärkeverteilung, die in einer Richtung tiefstrahlend ist und in der Richtung senkrecht dazu abgeschirmt. Im Bereich der Überlagerung der Bereiche B und D wird eine Lichtstärkeverteilung erzeugt, bei der die Lichtstärkeverteilungskurven in zwei zueinander senkrechten Ebenen (senkrecht zu den jeweiligen Längsachsen der Prismen) abgeschirmt ist, d. h. oberhalb von 60° unter den besagten Grenzwert abfällt.

Wenn die Bereiche A und B genügend groß sind, wird ein Betrachter den Bereich A heller als den Bereich B wahrnehmen, wenn er die Leuchte in der Richtung senkrecht zu der Längsrichtung der Prismen 54 und 56 in einem steilen Winkel betrachtet, in dem das Maximum der Lichtstärkeverteilungskurve des Bereichs A liegt. Entsprechendes gilt für die Bereiche C und D, wenn ein Betrachter die Leuchte in der Richtung senkrecht zu der Längsrichtung der Prismen 58 und 60 betrachtet. Wird dagegen die Beleuchtungsstärke in einem Fernbereich gemessen, in dem die Leuchte weitgehend eine punkt- oder linienförmige Lichtquelle bildet, überlagern sich die beiden Lichstärkeverteilungskurven, welche die Prismen 54 und 56 erzeugen. Man wird dann insgesamt eine Lichtstärkeverteilungskurve erhalten, die derjenigen einer abgeschirmtem Leuchte entspricht, aber bei kleinen Winkeln zur Senkrechten ein Maximum aufweist. Ob und inwieweit ein bestimmter Bereich heller oder dunkler wahrgenommen wird, hängt in der Regel von der Richtung ab, unter welcher die Lichtauskoppelfläche betrachtet wird.

Die Anordnung der Bereiche A bis D bildet nur eine beispielhafte Möglichkeit der Anordnung von vielen Möglichkeiten. Es kann beispielsweise vorgesehen sein, daß unterhalb des Bereiches A eine erste Prismenplatte mit der halben Breite der Platte 52 vorgesehen ist, die ausschließlich Prismen des Typ 58 aufweist, und neben dieser Platte eine zweiter Platte vorgesehen ist, welche ausschließlich Prismen des Typs 60 aufweist. Dies bedeutet, daß unterhalb der Prismen 56 ausschließlich Prismen 54 und unterhalb der Prismen 60 ausschließlich Prismen 58 liegen, so daß der Betrachter einen ersten streifenförmigen Bereich, welcher dem Bereich A der Platte 50 entspricht und eine tiefstrahlende Lichtstärkeverteilung abgibt, und einen zweiten streifenförmigen Bereich wahrnimmt, welcher dem Bereich B der Platte 50 entspricht und eine abgeschirmter Lichtstärkeverteilungskurve abgibt. Unter einem entsprechenden Blickwinkel wird der Betrachter daher den Bereich A heller als den Bereich B wahrnehmen und ein Streifenmuster von unterschiedlich hellen Streifen auf der Lichtaustrittsfläche sehen. Eine solche Einrichtung von unterschiedlich hellen und dunklen Bereichen kann aus dekorativen Gründen erwünscht sein. Sie kann jedoch auch in vorteilhafter Weise dafür verwendet werden, um Zeichen oder Symbole, beispielsweise einen Pfeil, auf der Lichtaustrittsfläche darzustellen, indem der Bereich des Symbols mit Prismen eines ersten Prismentyps und der Umgebungsbereich mit Prismen eines zweiten Typs besetzt werden, die jeweils so ausgestattet sind, daß zumindest unter bestimmten Blickwinkeln der Bereich des Symbols heller oder dunkler als die Umgebung erscheint.

Die Anordnung von Prismen auf den Platten 50 und 52 in Fig. 6 ist nur ein Beispiel für eine mögliche Anordnung.

Statt der in Fig. 6 für die Platten 50 und 52 dargestellten Prismenanordnungen kann auch für eine der Platten 50 und 52 oder für beide eine Prismenanordnung wie in Fig. 3 bis 5 gezeigt verwendet werden. Umgekehrt kann bei einer Ausführungsform mit einer Lichtauskoppeleinrichtung, die aus einer einzigen Prismenplatte besteht, diese Prismenplatte aus verschiedenen Bereichen bestehen, die jeweils einheitlich mit einem bestimmten Prismentyp besetzt sind, ähnlich oder identisch, wie bei den Platten 50 und 52.

Die vorangehend beschriebene Erfindung kann in vielfacher Hinsicht abgewandelt werden. Statt einem Hohllichtleiter, wie in dem vorangehend genannten Ausführungsbeispiel kann auch ein Vollichtleiter verwendet werden.

Während in dem vorangehend genannten Beispiel zwei Prismenplatten 50 und 52 mit linienförmigen Prismen, die senkrecht aufeinander stehen, verwendet wurden, kann auch nur eine einzige Platte eingesetzt werden, die mit einer Anordnung von linienförmigen Prismen versehen ist, aber auch, in einer Abwandlung, mit pyramidenförmigen oder anderen dreidimensionalen Prismen versehen sein kann. Grundsätzlich ist es auch möglich, zur Gestaltung der Lichtstärkeverteilungskurve drei oder mehr übereinanderliegende Platten einzusetzen.

Eine erfindungsgemäße Innenraumleuchte kann beispielsweise als Pendelleuchte, Deckeneinbau- oder Deckenanbauleuchte, Stehleuchte oder Tischleuchte ausgebildet sein.

Statt der in dem Ausführungsbeispiel dargestellten Leuchtstofflampe können auch andere Lampentypen verwendet werden.

Bezugszeichenliste

| 1 | Leuchte |
|---|---|
| 3 | Leuchtstofflampe |
| 5 | Hohllichtleiter |
| 6 | Hohlraum |
| 9 | Seitenwand |
| 11 | Lichtauskoppeleinrichtung |
| 13a, 13b | Reflektor |
| 40 | Lichtauskoppelplatte |
| 42 | Prisma |
| 44 | Prisma |
| 50 | Lichtauskoppelplatte |
| 52 | Lichtauskoppelplatte |
| 54 | Prisma |
| 56 | Prisma |
| 58 | Prisma |
| 60 | Prisma |

**Patentansprüche**

1. Leuchte mit einem Lichtleiter (5), in den von einer oder mehreren Lampen (3) an zumindest einer Lichteinkoppelseite Licht eingekoppelt wird und zumindest an einer Lichtaustrittsseite Licht ausgekoppelt wird, wobei die Lichtauskoppelseite an einer Lichtauskoppelfläche eine refraktive Lichtauskoppeleinrichtung (11) mit mehreren Lichtauskoppelelementen (42, 44; 54, 56, 58, 60) aufweist, welche aufgrund von Lichtbrechung eine Lichtlenkung des austretenden Lichtes bewirken,
**dadurch gekennzeichnet, daß** die lichtlenkenden Eigenschaften von Lichtauskoppelelementen (42, 44; 54, 56, 58, 60) zumindest auf einem Teilbereich der Lichtauskoppelfläche verschieden sind und daß in einem Querschnitt in einer bestimmten Richtung zumindest auf einem Teilbereich der Lichtauskoppelfläche Lichtauskoppelelemente verschiedenen Typs sich in einer nicht periodischen Sequenz wiederholen oder in einem Querschnitt in einer bestimmten Richtung zumindest auf einem Teilbereich der Lichtauskoppelfläche eine Anordnung von Lichtauskoppelelementen (42, 44) verschiedenen Typs sich periodisch wiederholt.

2. Leuchte nach Anspruch 1, **dadurch gekennzeichnet, daß** der Abstand zwischen zwei Lichtauskoppelementen mit unterschiedlichen lichtlenkenden Eigenschaften derart bemessen ist, daß der besagte Teilbereich der Lichtauskoppelfläche im wesentlichen wie ein Bereich mit einer einheitlichen Struktur von Lichtauskoppelelementen wahrgenommen wird.

**EP 1 156 268 B1**

3. Leuchte nach Anspruch 1 oder 2, **dadurch gekennzeichnet, daß** zumindest auf einem Teilbereich der Lichtauskoppelfläche in einem Abstand von weniger als 2 cm von einem Lichtauskoppelement (42; 54, 58) ein Lichtauskoppelement mit anderen lichtlenkenden Eigenschaften (44; 56, 60) liegt.

4. Leuchte nach einem der Ansprüche 1 bis 3, **dadurch gekennzeichnet, daß** zumindest auf einem Teilbereich der Lichtauskoppelfläche zumindest in einer Richtung auf ein Lichtauskoppelement (42; 54, 58) nach spätestens 100 weiteren Lichtauskoppelementen ein Lichtauskoppelement (44; 56, 60) mit anderen lichtlenkenden Eigenschaften folgt.

5. Leuchte nach einem der Ansprüche 1 bis 4, **dadurch gekennzeichnet, daß** auf einer Lichtauskoppelfläche zumindest ein Teil der Lichtauskoppelelemente bezüglich einer zu der Lichtauskoppelfläche senkrecht stehenden Ebene symmetrisch ist und ein weiterer Teil der Lichtauskoppelelemente keine Symmetrie zu einer solchen Ebene aufweist.

6. Leuchte nach einem der Ansprüche 1 bis 5, **dadurch gekennzeichnet, daß** zumindest ein Teil der Lichtauskoppelelemente (42, 44; 54, 56, 58, 60) an einem freien Ende zwei einander gegenüberliegende und zueinander geneigte Flächen aufweist, wobei der Öffnungswinkel ($\gamma_1$, $\gamma_2$, $\gamma_3$, $\gamma_4$), in dem diese beiden Flächen, bezogen auf einen Schnitt in einer Ebene senkrecht zu der Lichtauskoppelfläche, zueinander geneigt sind, für einen Teil dieser Lichtauskoppelelemente verschieden von dem Öffnungswinkel anderer Lichtauskoppelelemente ist.

7. Leuchte nach Anspruch 6, **dadurch gekennzeichnet, daß** zumindest ein Teil der Lichtauskoppelelemente linienförmige Prismen (42, 44; 54, 56, 58, 60) sind.

8. Leuchte nach einem der Ansprüche 1 bis 7, **dadurch gekennzeichnet, daß** zumindest auf einem Teilabschnitt der Lichtauskoppelfläche alle Lichtauskoppelelemente (42, 44; 54, 56, 58, 60) die gleiche Grundform, aber verschiedene Abmessungen und/oder Winkel zwischen den Außenflächen aufweisen.

9. Leuchte nach einem der Ansprüche 1 bis 8, **dadurch gekennzeichnet, daß** die Lichtauskoppeleinrichtung (11) zumindest über einem Teilbereich der Lichtauskoppelfläche in einer Ebene senkrecht zu der Lichtauskoppelfläche eine Abschirmung derart erzeugt, daß oberhalb eines bestimmten Cirenzwinkels zu einer Senkrechten zu der Lichtauskoppelfläche die Leuchtdichte unter einen vorbestimmten Grenzwert fällt.

10. Leuchte nach einem der Ansprüche 1 bis 9, **dadurch gekennzeichnet, daß** in der Lichtauskoppeleinrichtung ein erster Prismentyp (42; 54, 58), welcher eine erste Leuchtdichteverteilungskurve des ausgekoppelten Lichtes erzeugt, und ein zweiter Prismentyp (44; 56, 60), welcher eine zweite, von der ersten verschiedene Leuchtdichteverteilungskurve des ausgekoppelten Lichtes erzeugt, vorgesehen sind, derart, daß in einer Ebene senkrecht zur Lichtauskoppelfläche ein Minimum der ersten Leuchtdichteverteilungskurve durch einen Bereich der zweiten Leuchtdichteverteilungskurve überlagert wird, der kein Minimum aufweist, so daß die Leuchtdichteverteilungskurve der Leuchte insgesamt vergleichmäßigt wird.

11. Leuchte nach einem der Ansprüche 1 bis 10, **dadurch gekennzeichnet, daß** die Dichte der verschiedenen Lichtauskoppelelemente (42, 44) über der Lichtauskoppelfläche oder einem Teil davon konstant ist.

12. Leuchte nach einem der Ansprüche 1 bis 11, **dadurch gekennzeichnet, daß** die Lichtauskoppelfläche zumindest zwei Bereiche (A, B; C, D) aufweist, in denen die Dichte der Lichtauskoppelemente eines Typs verschieden ist.

13. Leuchte nach Anspruch 12, **dadurch gekennzeichnet, daß** ein Teilbereich der Lichtaustrittsfläche der Leuchte für einen Beobachter zumindest unter einem Blickwinkel sich hinsichtlich seiner Helligkeit von benachbarten Bereichen abhebt.

14. Leuchte nach einem der Ansprüche 1 bis 13, daß zumindest auf einem Teilbereich der Lichtauskoppelfläche ein Parameter der Lichtauskoppelemente einer nicht konstanten Funktion folgt.

15. Leuchte nach einem der Ansprüche 1 bis 14, **dadurch gekennzeichnet, daß** Lichtauskoppelelemente (42, 44) mit unterschiedlichen Eigenschaften zumindest auf einem Teilbereich der Lichtauskoppelfläche angeordnet sind, wobei die Werte der Parameter, welche diese Eigenschaften festlegen, über diesem Teilbereich statistisch verteilt sind.

16. Leuchte nach Anspruch 15, **dadurch gekennzeichnet, daß** zumindest ein Teilbereich der Lichtauskoppelfläche als Fresnel-Linse ausgebildet ist.

**Claims**

1. Luminaire having a light guide (5) into which light is coupled from one or more lamps (3) on at least one light coupling side and light is decoupled at least at one light exit side, the light decoupling side having at a light decoupling surface a refractive light decoupling device (11) with a number of light decoupling elements (42, 44; 54, 56, 58, 60) which direct the emerging light on the basis of refraction of light, **characterized in that** the light-directing properties of the light decoupling elements (42, 44; 54, 56, 58, 60) are different at least on a subregion of the light decoupling surface, and **in that** light decoupling elements of different types are repeated in a non-periodic sequence in a cross section in a specific direction at least on a subregion of the light decoupling surface, or an arrangement of light decoupling elements (42, 44) of different types is repeated periodically in a cross section in a specific direction at least on a subregion of the light decoupling surface.

2. Luminaire according to Claim 1, **characterized in that** the distance between two light decoupling elements with different light-directing properties is dimensioned in such a way that the said subregion of the light decoupling surface is substantially perceived as a region with a uniform structure of light decoupling elements.

3. Luminaire according to Claim 1 or 2, **characterized in that** lying at least on a subregion of the light decoupling surface at a distance of less than 2 cm from one light decoupling element (42; 54, 58) is a light decoupling element with different light-directing properties (44; 56, 60).

4. Luminaire according to one of Claims 1 to 3, **characterized in that** following at least on a subregion of the light decoupling surface, at least in a direction of a light decoupling element (42; 54, 58), after 100 further light decoupling elements at the latest, is a light decoupling element (44; 56, 60) with different light-directing properties.

5. Luminaire according to one of Claims 1 to 4, **characterized in that** at least one portion of the light decoupling elements on a light decoupling surface are symmetrical relative to a plane perpendicular to the light decoupling surface, and a further portion of the light decoupling elements exhibit no symmetry relative to such a plane.

6. Luminaire according to one of Claims 1 to 5, **characterized in that** at a free end at least one portion of the light decoupling elements (42, 44; 54, 56, 58, 60) have two surfaces situated opposite one another and inclined to one another, the aperture angle ($\gamma_1$, $\gamma_2$, $\gamma_3$, $\gamma_4$) at which these two surfaces are inclined to one another with reference to a section in a plane perpendicular to the light decoupling surface differing from the aperture angle of other light decoupling elements for a portion of these light decoupling elements.

7. Luminaire according to Claim 6, **characterized in that** at least one portion of the light decoupling elements are linear prisms (42, 44; 54, 56, 58, 60).

8. Luminaire according to one of Claims 1 to 7, **characterized in that** at least on one subsegment of the light decoupling surface, all the light decoupling elements (42, 44; 54, 56, 58, 60) have the same basic shape but various dimensions and/or angles between the outer surfaces.

9. Luminaire according to one of Claims 1 to 8, **characterized in that**, at least over a subregion of the light decoupling surface in a plane perpendicular to the light decoupling surface, the light decoupling device (11) produces a screening effect in such a way that above a specific limiting angle to a perpendicular to the light decoupling surface the luminance falls below a predetermined limiting value.

10. Luminaire according to one of Claims 1 to 9, **characterized in that** a first prism type (42; 54, 58), which produces a first luminance distribution curve of the decoupled light, and a second prism type (44; 56, 60), which produces a second luminance distribution curve, different from the first, of the decoupled light, are provided in the light decoupling device in such a way that in a plane perpendicular to the light decoupling surface there is superimposed on a minimum of the first luminance distribution curve a region of the second luminance distribution curve which has no minimum, such that the luminance distribution curve of the luminaire is homogenized overall.

11. Luminaire according to one of Claims 1 to 10, **characterized in that** the density of the various light decoupling elements (42, 44) is constant over the light decoupling surface or a part thereof.

12. Luminaire according to one of Claims 1 to 11, **characterized in that** the light decoupling surface has at least two regions (A, B; C, D) in which the density of the light decoupling elements of one type is different.

13. Luminaire according to Claim 12, **characterized in that**, with regard to its brightness, a subregion of the light exit surface of the luminaire stands out from neighbouring regions for an observer, at least at one viewing angle.

14. Luminaire according to one of Claims 1 to 13, **characterized in that** a parameter of the light decoupling elements follows a non-constant function at least on a subregion of the light decoupling surface.

15. Luminaire according to one of Claims 1 to 14, **characterized in that** light decoupling elements (42, 44) with different properties are arranged at least on a subregion of the light decoupling surface, the values of the parameters which determine these properties being distributed statistically over this subregion.

16. Luminaire according to Claim 15, **characterized in that** at least one subregion of the light decoupling surface is designed as a Fresnel lens.

**Revendications**

1. Lampe à guide de lumière (5), dans lequel de la lumière est injectée depuis une ou plusieurs lampes (3) sur au moins un côté d'injection de lumière et de la lumière est extraite sur un côté de sortie de lumière, le côté d'extraction de lumière présentant sur une face d'extraction de lumière un dispositif d'extraction de lumière réfractif (11) avec plusieurs éléments d'extraction de lumière (42, 44 ; 54, 56, 58, 60) qui, en raison de la réfraction de la lumière, provoque une déviation de la lumière sortante,
**caractérisée en ce que** les propriétés de déviation de la lumière d'éléments d'extraction de lumière (42, 44 ; 54, 56, 58, 60) sont différentes au moins sur une région partielle de la surface d'extraction de la lumière et **en ce que** dans une section transversale dans une direction déterminée, au moins sur une région partielle de la surface d'extraction de la lumière, des éléments d'extraction de lumière de type différent se succèdent dans une séquence non périodique ou, dans une section transversale dans une direction déterminée au moins sur une région partielle de la surface d'extraction de lumière, un agencement d'éléments d'extraction de lumière (42,44) de type différent est reproduit périodiquement.

2. Lampe selon la revendication 1, **caractérisée en ce que** la distance entre deux éléments d'extraction de lumière avec des propriétés de déviation de la lumière différentes est dimensionnée de telle sorte que ladite région partielle de la surface d'extraction de la lumière soit perçue essentiellement comme une région avec une structure unitaire d'éléments d'extraction de lumière.

3. Lampe selon la revendication 1 ou 2, **caractérisée en ce qu'**au moins sur une région partielle de la surface d'extraction de la lumière à une distance inférieure à 2 cm d'un élément d'extraction de la lumière (42 ; 54, 58), est prévu un élément d'extraction de la lumière ayant d'autres propriétés de déviation de la lumière (44 ; 56, 60).

4. Lampe selon l'une quelconque des revendications 1 à 3, **caractérisée en ce qu'**au moins sur une région partielle de la surface d'extraction de lumière au moins dans la direction d'un élément d'extraction de lumière (42 ; 54, 58), après au plus 100 autres éléments d'extraction de la lumière, arrive un élément d'extraction de la lumière (44 ; 56, 60) ayant d'autres propriétés de déviation de la lumière.

5. Lampe selon l'une quelconque des revendications 1 à 4, **caractérisée en ce que** sur une surface d'extraction de la lumière au moins une partie des éléments d'extraction de lumière est symétrique par rapport à un plan perpendiculaire à la surface d'extraction de la lumière et une autre partie des éléments d'extraction de lumière ne présente aucune symétrie par rapport à un tel plan.

6. Lampe selon l'une quelconque des revendications 1 à 5, **caractérisée en ce qu'**au moins une partie des éléments d'extraction de lumière (42, 44 ; 54, 56, 58, 60) présente à une extrémité libre deux surfaces opposées et inclinées l'une vers l'autre, l'angle d'ouverture (γ1, γ2, γ3, γ4) suivant lequel ces deux surfaces sont inclinées l'une vers l'autre par rapport à une coupe dans un plan perpendiculairement à la surface d'extraction de lumière étant différent pour une partie de ces éléments d'extraction de lumière de l'angle d'ouverture d'autres éléments d'extraction de lumière.

7. Lampe selon la revendication 6, **caractérisée en ce qu'**au moins une partie des éléments d'extraction de lumière sont des prismes de forme linéaire (42, 44 ; 54, 56, 58, 60).

8. Lampe selon l'une quelconque des revendications 1 à 7, **caractérisée en ce qu'**au moins sur une portion partielle de la surface d'extraction de la lumière, tous les éléments d'extraction de lumière (42, 44 ; 54, 56, 58, 60) présentent la même forme de base, mais présentent différentes dimensions et/ou différents angles entre les surfaces extérieures.

9. Lampe selon l'une quelconque des revendications 1 à 8, **caractérisée en ce que** le dispositif d'extraction de la lumière (11) produit au moins sur une région partielle de la surface d'extraction de la lumière dans un plan perpendiculaire à la surface d'extraction de la lumière une protection telle que la densité de lumière tombe en dessous d'une valeur limite prédéterminée au-dessus d'un angle limite prédéterminé par rapport à une verticale à la surface d'extraction de la lumière.

10. Lampe selon l'une quelconque des revendications 1 à 9, **caractérisée en ce que** l'on prévoit dans le dispositif d'extraction de la lumière un premier type de prisme (42; 54, 58) qui produit une première courbe de répartition de la densité de lumière de la lumière extraite et un deuxième type de prisme (44 ; 56, 60) qui produit une deuxième courbe de répartition de la densité de lumière de la lumière extraite, différente de la première, de telle sorte que dans un plan perpendiculaire à la surface d'extraction de la lumière, un minimum de la première courbe de répartition de la densité de lumière soit couvert par une région de la deuxième courbe de répartition de la densité de lumière, qui ne présente pas de minimum, de sorte que la courbe de répartition de la densité de lumière soit uniformisée dans son ensemble.

11. Lampe selon l'une quelconque des revendications 1 à 10, **caractérisée en ce que** la densité des différents éléments d'extraction de lumière (42, 44) est constante sur la surface d'extraction de la lumière ou sur une partie de celle-ci.

12. Lampe selon l'une quelconque des revendications 1 à 11, **caractérisée en ce que** la surface d'extraction de la lumière présente au moins deux régions (A, B ; C, D) dans lesquelles la densité des éléments d'extraction de lumière d'un type est différente.

13. Lampe selon la revendication 12, **caractérisée en ce qu'**une région partielle de la surface d'extraction de la lumière ressort de par sa clarté par rapport aux régions voisines pour un observateur au moins suivant un certain angle de vue.

14. Lampe selon l'une quelconque des revendications 1 à 13, **caractérisée en ce qu'**au moins sur une région partielle de la surface d'extraction de la lumière, un paramètre des éléments d'extraction de lumière suit une fonction non constante.

15. Lampe selon l'une quelconque des revendications 1 à 14, **caractérisée en ce que** des éléments d'extraction de lumière (42, 44) ayant des propriétés différentes sont disposés au moins sur une région partielle de la surface d'extraction de la lumière, les valeurs des paramètres qui définissent ces propriétés étant réparties statistiquement sur cette région partielle.

16. Lampe selon la revendication 15, **caractérisée en ce qu'**au moins une région partielle de la surface d'extraction de la lumière est réalisée sous forme de lentille de Fresnel.

**Fig. 1**

**Fig. 2**

42 44 42 44 42 44 42 44 42 44

40 $\gamma_1$ $\gamma_2$

**Fig. 3**

42 44 42 42 42 44 42 42 42 44 42 42

$\gamma_1$ $\gamma_2$ 40

**Fig. 4**

42 44 42 42 44 42 42 42 44 44

$\gamma_1$ $\gamma_2$ $F_1$ $F_2$

**Fig. 5**

**Fig. 6**